(19) **Europäisches Patentamt / European Patent Office / Office européen des brevets**

(11) **EP 4 752 352 A1**

(12) # EUROPEAN PATENT APPLICATION

(43) Date of publication:
03.06.2026 Bulletin 2026/23

(21) Application number: 25216543.6

(22) Date of filing: 18.11.2025

(51) International Patent Classification (IPC):
**F02C 9/00** (2006.01)

(52) Cooperative Patent Classification (CPC):
**F02C 9/00;** F05D 2220/76; F05D 2260/20;
F05D 2260/821; F05D 2270/11; F05D 2270/20;
F05D 2270/335; F05D 2270/44; F05D 2270/71

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 27.11.2024 GB 202417381

(71) Applicant: **Rolls-Royce plc**
**London N1 9FX (GB)**

(72) Inventors:
• **Wall, Derek S**
  **Derby, DE24 8BJ (GB)**
• **Mills, Andrew R**
  **Derby, DE24 8BJ (GB)**
• **Jacobs, William R**
  **Derby, DE24 8BJ (GB)**
• **Kadirkamanathan, Visakan**
  **Derby, DE24 8BJ (GB)**

(74) Representative: **Rolls-Royce plc**
**P.O. Box 31**
**IP Department (SinA-48)**
**Derby Derbyshire DE24 8BJ (GB)**

(54) **SCHEDULING THE POWER OF A GAS TURBINE POWER SYSTEM**

(57)  A power event manager controller for a gas turbine engine power system, the gas turbine engine power system comprising at least one gas turbine engine, a thermal management system and at least one of a generator, an energy storage system, the power event manager controller receiving an input power demand, and receiving input relating to the mission plan, and inputs from each of the systems within the gas turbine engine power system, based upon the inputs from the from the power demand and the mission plan the power event controller defines a series of constraints, and wherein the power event manager controller utilises an optimiser function to obtain control reference trajectories which minimise an objective cost function of modelled states, whilst being subject to the series of constraints.

FIG. 1

EP 4 752 352 A1

```
┌─────────────────────────────┐
│                             │
│            301              │
│                             │
└─────────────────────────────┘
              │
              ▼
┌─────────────────────────────┐
│                             │
│            302              │
│                             │
└─────────────────────────────┘
              │
              ▼
┌─────────────────────────────┐
│                             │
│            303              │
│                             │
└─────────────────────────────┘
              │
              ▼
┌─────────────────────────────┐
│                             │
│            304              │
│                             │
└─────────────────────────────┘
              │
              ▼
┌─────────────────────────────┐
│                             │
│            305              │
│                             │
└─────────────────────────────┘
```

FIG. 3

**Description**

**Overview**

The disclosure relates to a control system for an aircraft having at least one gas turbine engine. In particular, the disclosure relates to a control system for controlling the power and thermal systems within an aircraft having at least one gas turbine engine.

**Background**

As gas turbine engines as well as the aircraft around them become more reliant on electrical power generated from the engine the requirements for improved control systems increases. The power systems that are responsible for the supply of power to the equipment within the gas turbine engine and/or the aircraft may be generators connected to the gas turbine engine, batteries and other energy storage systems (ESS) or other direct or indirect electrical generation systems. Due to the increased number of components present, it is important to ensure that these components are operating optimally and do not overheat. Therefore, a robust thermal management system needs to be used in conjunction with the engine and the electrical supply system. The electrical and thermal systems have higher degrees of control freedom available in order to achieve a desired operational demand in comparison to traditional air breathing propulsion plants. These degrees of freedom come from multiple subsystems of the generators, ESS and the plurality of active and passive thermal heat sinks that are used. Conventional designs of electrical systems use a predefined selection for choice of operating demand, and therefore do not explicitly exploit any degrees of freedom available.

Utilising these degrees of freedom presents a trade-off between control demands, many of which may present an optimal solution against different criteria that has been set for example, life extension, performance, robustness to change, etc... The choice of solution can therefore have a direct impact upon the engine. Calculating these differing optimal demands for subsystems depends upon the settings entered into an optimiser. The entered settings may include one or more of hard and/or soft constraints on physical states, weighting of particular states, demand preferences for some redundant sub-system, etc. Determining these optimiser settings is complex and dependent upon time and the flight requirements. In order to overcome the time limitations of the pilot or operator a number of predefined preferences are often made. These preferences must be specifiable in a manner which are transparent and meaningful in how they may be used by the optimiser and affect the optimiser generated control demands. This is particularly important for a system subject to anticipated and unanticipated disturbances. Therefore, there is a demand for an improved control system.

**Summary of the Disclosure**

The scope of the disclosure is set out in the appended claims.

According to a first aspect of the disclosure there is presented a power event manager controller for a gas turbine engine power system, the gas turbine engine power system comprising at least one gas turbine engine, a thermal management system and at least one of a generator, an energy storage system, the power event manager controller receiving an input power demand, and receiving input relating to the mission plan, and inputs from each of the systems within the gas turbine engine power system, based upon the inputs from the from the power demand and the mission plan the power event controller defines a series of constraints, and wherein the power event manager controller utilises an optimiser function to obtain control reference trajectories which minimise an objective cost function of modelled states, whilst being subject to the series of constraints.

Risk factors may be input into the power event manager, the risk factors further acting as an expression of operator preferences, the optimiser in determining an optimal solution to the input demand, and wherein the risk factors may include at least one of the following: Acceptable level of probability of performance critical component failure and/or a particular level of degraded performance.

The risk factors may be realised by being inputted into the power event manager as a series of system stressors and the optimiser is configured to find a solution which minimises the stressors.

The risk factors resulting in key stressors may be inputted into the power event manager controller as soft constraints, wherein the soft constraints penalise the exceedance of boundaries within which the optimal solution is present and the optimiser is configured to find a solution which fits within the maximum number of constraints.

The power event manager controller may be configured through the risk factors to have a preference to a solution that is for failure avoidance of components within the gas turbine engine power system.

The power event manager controller may be configured to determine a probability of functional failure by following the following steps:

a. Produce a baseline plan for the mission based on future demands specified by mission plan,

b. Calculate the relative mission stress using lifing models,

c. Integrate over failure cause level probability and reliability distributions to obtain probability of functional failure.

The power event manager controller assess if the determined risk exceeds a determined risk threshold, if it does the power event manager controller may perform the following steps:

i. Rank functional failures,

ii. Differentiate lifing models to obtain failure probability (stress) sensitivity to plant state (may be performed a priori during design),

iii. Select most significant 'stressor state' set (size of set is design parameter >=1),

iv. Modify objective function of PEM to maximally minimise state(s) (rather than as hard constraint),

v. Execute optimiser to create a new plan and check its feasibility.

If the risk is determined to exceed a threshold the optimiser may reperform steps b - c. and i-v until the risks are mitigated or the computational resources are exhausted.

The optimiser of the power event manager controller may be configured to determine a solution that optimise for impact mitigation.

The power event manager controller may determine at least one value indicative of the reserve capability of the gas turbine engine power system.

The power event manager controller may be configured to recalculate a mission plan based on most likely functional health and capability, estimate a required maximum capability and compare the required capability to a degraded capability which is determined by constraints within the system.

The power event manager controller may be configured to at each optimisation step calculate the amount of energy reserves needed to mitigate a decrease in capability to the degraded level for a mitigation delay time duration and sets this energy reserve as a varying constraint in the optimiser, repeats comparing required capability to the degraded capability.

According to a second aspect of the disclosure there is provided a method of scheduling the power of a gas turbine power system having a thermal management system and at least one of a generator or energy storage system, the method comprising: receiving an input form an operator relating to a change of demand, receiving an input related to the mission plan, receiving inputs from each of the systems within the gas turbine engine power system, defining a series of constraints based upon the inputs from the from the power demand and the mission plan the power event controller, using a power event manager of the gas turbine power system, the power event manager having an optimiser function, and using this optimiser function to obtain control reference trajectories which minimise an objective cost function of modelled states, whilst being subject to the series of constraints.

The method may further comprises inputting risk factors into the power event manager, the risk factors further acting as an expression of operator preferences on the optimiser in determining an optimal solution to the input demand, and wherein the risk factors may include at least one of the following: Acceptable level of probability of performance critical component failure and/or a particular level of degraded performance.

The risk factors may be inputted into the power event manager controller as stressors, and the optimiser is configured to find a solution which minimises the stressors.

The risk factors resulting in key stressors may be inputted into the power event manager controller as soft constraints, wherein the soft constraints penalise the exceedance of boundaries within which the optimal solution is present and the optimiser is configured to find a solution which fits within the maximum number of constraints.

The power event manager optimiser function may be configured through the risk factors to have a preference to a solution that is for failure avoidance of components within the gas turbine engine power system.

The skilled person will appreciate that except where mutually exclusive, a feature described in relation to any one of the above aspects may be applied mutatis mutandis to any other aspect. Furthermore, except where mutually exclusive any feature described herein may be applied to any aspect and/or combined with any other feature described herein.

## Brief Description of the Drawings

Embodiments will now be described by way of example only with reference to the accompanying drawings, which are purely schematic and not to scale, and in which:

Figure 1 shows a general arrangement of a turbofan engine for an aircraft;

Figure 2 presents a schematic of an example of the set-up of a PEM within a gas turbine;

Figure 3 presents an example flow chart of the operation of the PEM;

Figure 4 presents a thrust demand trajectory for mission acceleration manoeuvre produced under different objective weightings, bounded by mission limits on thrust demand;

Figure 5 presents an example of a calculation of energy reserve preferences based on acceptable probability of failure risk;

Figure 6 presents a flow chart of a method of determining the optimum solution for at least one of the power, thermal management system of at least one more electric gas turbine engine.

**Detailed disclosure**

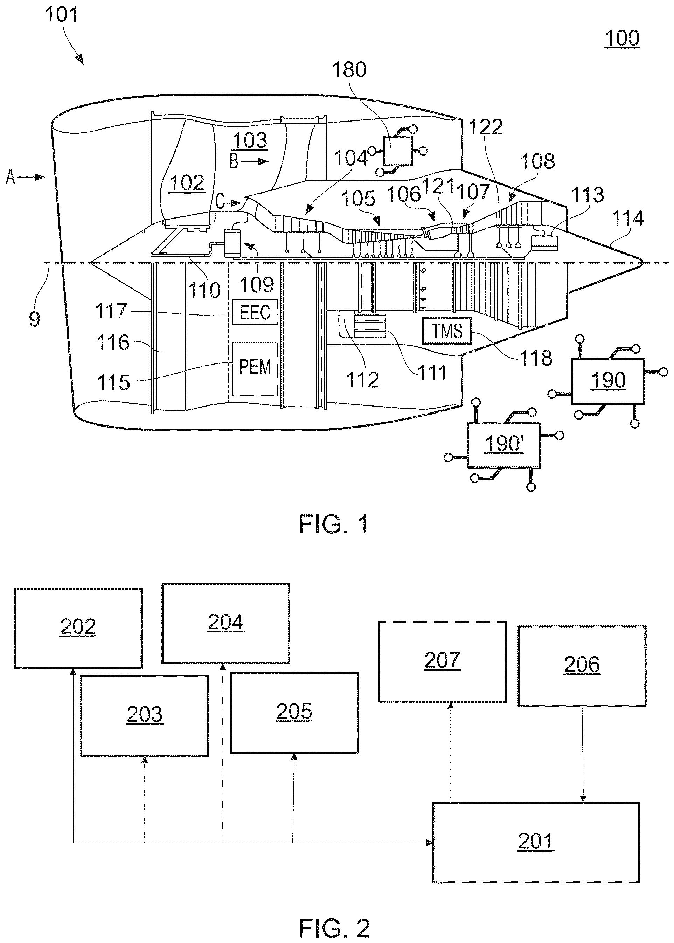

A general arrangement of an engine 101 for an aircraft is shown in Figure 1. The engine 101 is of turbofan configuration, and thus comprises a ducted fan 102 that receives intake air A and generates two pressurised airflows: a bypass flow B which passes axially through a bypass duct 103 and a core flow C which enters a core gas turbine.

The core gas turbine comprises, in axial flow series, a low-pressure compressor 104, a high-pressure compressor 105, a combustor 106, a high-pressure turbine 107, and a low-pressure turbine 108.

In operation, the core flow C is compressed by the low-pressure compressor 104 and is then directed into the high-pressure compressor 105 where further compression takes place. The compressed air exhausted from the high-pressure compressor 105 is directed into the combustor 106 where it is mixed with fuel and the mixture is combusted. The resultant hot combustion products then expand through, and thereby drive, the high-pressure turbine 107 and in turn the low-pressure turbine 108 before being exhausted to provide a small proportion of the overall thrust.

The high-pressure turbine 107 drives the high-pressure compressor 105 via an interconnecting shaft. The low-pressure turbine 108 drives the low-pressure compressor 104 via another interconnecting shaft. Together, the high-pressure compressor 105, high-pressure turbine 107, and associated interconnecting shaft form part of a high-pressure spool of the engine 101. Similarly, the low-pressure compressor 104, low-pressure turbine 108, and associated interconnecting shaft form part of a low-pressure spool of the engine 101. Such nomenclature will be familiar to those skilled in the art. Those skilled in the art will also appreciate that whilst the illustrated engine has two spools, other gas turbine engines have a different number of spools, e.g., three spools.

The fan 102 is driven by the low-pressure turbine 108 via a reduction gearbox in the form of a planetary configuration epicyclic gearbox 109. Thus, in this configuration, the low-pressure turbine 108 is connected with a sun gear of the gearbox 109. The sun gear is meshed with a plurality of planet gears located in a rotating carrier, which planet gears are in turn meshed with a static ring gear. The rotating carrier drives the fan 102 via a fan shaft 110. It will be appreciated that in alternative embodiments a star-configuration epicyclic gearbox (in which the planet carrier is static, and the ring gear rotates and provides the output) may be used instead, and indeed that the gearbox 109 may be omitted entirely so that the fan 102 is driven directly by the low-pressure turbine 108.

It is increasingly desirable to facilitate a greater degree of electrical functionality on the airframe and on the engine. To this end, the engine 101 of the present embodiment comprises one or more rotary electric machines, generally capable of operating both as a motor and as a generator. The number and arrangement of the rotary electric machines will depend to some extent on the desired functionality. Some embodiments of the engine 101 include a single rotary electric machine 111 driven by the high-pressure spool, for example by a core-mounted accessory drive 112 of conventional configuration. Such a configuration facilitates the generation of electrical power for the engine and the aircraft and the driving of the high-pressure spool to facilitate starting of the engine in place of an air turbine starter. Other embodiments, including the one shown in Figure 1, comprise both a first rotary electric machine 111 coupled with the high-pressure spool and a second rotary electric machine 113 coupled with the low-pressure spool. In addition to generating electrical power and the starting the engine 101, having both first and second rotary machines 111, 113, connected by power electronics, can facilitate the transfer of mechanical power between the high and lower pressure spools to improve operability, fuel consumption etc.

As mentioned above, in Figure 1 the first rotary electric machine 111 is driven by the high-pressure spool by a core-mounted accessory drive 112 of conventional configuration. In alternative embodiments, the first electric machine 111 may be mounted coaxially with the turbomachinery in the engine 101. For example, the first electric machine 111 may be mounted axially in line with the duct between the low- and high-pressure compressors 104 and 105. In Figure 1, the second electric machine 113 is mounted in the tail cone 114 of the engine 101 coaxially with the turbomachinery and is coupled to the low-pressure turbine 108. In alternative embodiments, the second rotary electric machine 113 may be located axially in line with low-pressure compressor 104, which may adopt a bladed disc or bladed drum configuration to provide space for the second rotary electric machine 113. It will of course be appreciated by those skilled in the art that any other suitable location for the first and (if present) second electric machines may be adopted.

The first and second electric machines 111, 113 are connected with power electronics. Extraction of power from or application of power to the electric machines is performed by a power electronics module (PEM) 115. In the present embodiment, the PEM 115 is mounted on the fan case 116 of the engine 101, but it will be appreciated that it may be mounted elsewhere such as on the core of the gas turbine, or in the vehicle to which the engine 101 is attached, for example.

Control of the PEM 115 and of the first and second electric machines 111 and 113 is in the present example performed by an engine electronic controller (EEC) 117. In the present embodiment the EEC 117 is a full-authority digital engine controller (FADEC), the configuration of which will be known and understood by those skilled in the art. It therefore controls all aspects of the engine 101, i.e., both of the core gas turbine and the first and second electric machines 111 and 113. In this way, the EEC 117 may holistically respond to both thrust demand and electrical power demand.

The one or more rotary electric machines 111, 113 and the power electronics 115 may be configured to output to or receive electric power from one, two or more dc busses. The dc busses allow for the distribution of electrical power to other engine electrical loads and to electrical loads on the airframe. The dc busses may further receive electrical power from, or deliver electrical power to, an energy storage system such as one or more battery modules or packs.

Those skilled in the art will appreciate that the gas turbine engine 101 described above may be regarded as a 'more electric' gas turbine engine because of the increased role of the electric machines 111, 113 compared with those of conventional gas turbines.

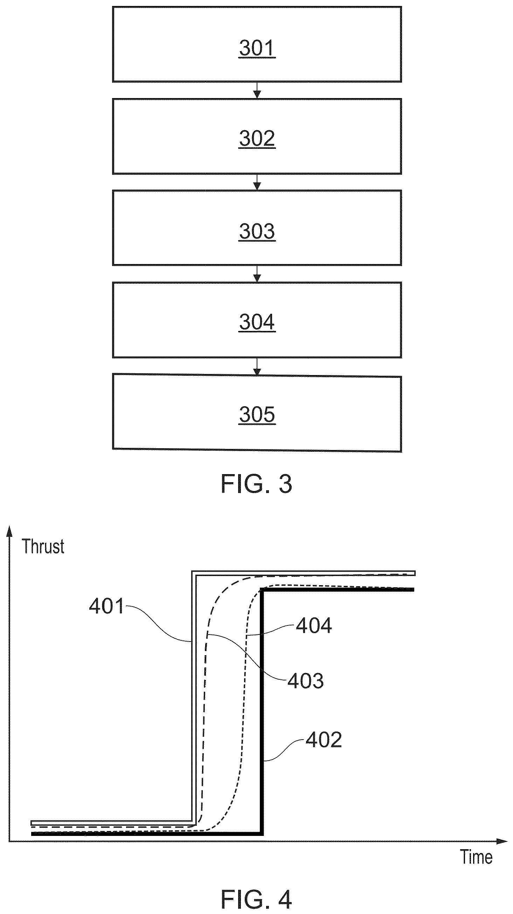

In Figure 1, the high-pressure spool is denoted by 121 whereas the low-pressure spool is denoted by 122. The high-pressure spool 121 and/or the low-pressure spool 122 may be more simply referred to as the spool 121, 122 of the gas turbine engine 101 herein. Consequently, references herein to the spool of the gas turbine engine 101 may apply to either the high-pressure spool 121 or the low-pressure spool 122. Figure 1 shows an apparatus 100 comprising a controller 190 and the gas turbine engine 101. The controller 190 is configured to carry out a method of operating the gas turbine engine 101, as discussed in further detail below with reference to Figures 4-6. The apparatus 190 may also comprise a sensing arrangement 180, as also discussed in further detail below.

The gas turbine engine 101 is provided with a thermal management system (TMS) 118. As shown in the example of Figure 1, the TMS 118 may be disposed inside the gas turbine engine 101 such that the TMS 118 is internal to the gas turbine engine 101. In other examples, the TMS 118 may be disposed at least partially outside the gas turbine engine 101 such that the TMS 118 is at least partially external to the gas turbine engine 101. The TMS 118 is generally configured to remove heat from the gas turbine engine 101 and/or redistribute heat within the gas turbine engine 101. The TMS may also be responsible for the removal of heat from the electrical systems such as ESS or generators. The TMS 118 is configured to transfer heat from a thermal source of the gas turbine engine 101 to a thermal sink. The thermal sink may be internal to or external to the gas turbine engine 101. Depending on whether the thermal sink is an internal thermal sink or an external thermal sink, the TMS 118 is configured to either remove heat from the gas turbine engine 101 or redistribute heat within the gas turbine engine 101. The TMS 118 may primarily be used for transferring heat from the thermal source to the thermal sink while the gas turbine engine 101 is in the thrust-generating state, but according to the present disclosure is also configured and operable to transfer heat from the thermal source to the thermal sink while the gas turbine engine 101 is in the idle state and/or the cranked state. The TMS 118 is suitable for managing thermal loads in a variety of operating states of the gas turbine engine 101. The TMS 118 includes a fluid pathway for circulating a coolant. The coolant may be a fluid other than air. The fluid pathway is a closed circuit, and as such is configured to prevent the coolant circulated therein in use from mixing with, or being discharged to, ambient air.

Removing heat from the gas turbine engine 101 includes transferring heat from a thermal source of the gas turbine engine 101 to an external thermal sink (e.g., an external medium). The external thermal sink may be, for example, ambient air.

Similarly, redistributing heat within the gas turbine engine 101 includes transferring heat from a thermal source of the gas turbine engine 101 to an internal thermal sink of the gas turbine engine 101 (e.g., an internal medium). The internal thermal sink may be, for instance, a component of the engine outside of the core or a reservoir of, or circulating flow of, fluid associated with the TMS 118 such as oil or fuel. The thermal source of the gas turbine engine 101 may be, for example, a core of the gas turbine engine 101 or a component of the core such as a compressor disc (e.g., the low-pressure compressor 104 or the high-pressure compressor 105), a combustor (e.g., the combustor 106) or a turbine disc (e.g., the high-pressure turbine 107 or the low-pressure turbine 108). Further, the thermal source(s) of the gas turbine engine 101 may be, for instance, engine-mounted or engine proximal accessories such as control units and/or electrical/electronic components which require cooling so as to be protected from the possible thermal damage due to thermal soak-back from, for example, the core of the gas turbine engine 101 or a component of the core such as a compressor disc.

In order to control the engine and the electrical power setting against heat and other requirements requires planning. Flight or mission planning is a complex problem. It involves mapping the power and/or thermal loads that are required against the system availability for different conditions and aspects of the mission/flight. In flight control of these systems is provided by the power event manager (PEM) schedular. The PEM scheduler allows the pilot or the automatic piloting system to change the requirements on the power and/or the thermal management system to perform a desired task. Figure 2 presents a schematic of an example of the set-up of a PEM 201 with a gas turbine 202 having an Energy storage system 203, a generator 204 and an integrated thermal management system 205. In the example signals from the ESS, generator and the integrated thermal management system are processed by the PEM, this is along with information form the mission/flight system 206. The information of the mission/flight system may be stored in memory associated with the controller that the PEM operates on. All the signals directed to the PEM are processed by the PEM optimiser 207 and the output from the PEM is an optimised control signal to at least one of the ESS, generator or thermal management signal for a change of state.

The PEM utilises an optimiser function to obtain control reference trajectories which minimise an objective cost function of modelled states, whilst being subject to constraints (equality or inequality) containing state limits and performance demands. If no solution can be found which satisfies all constraints, the problem is infeasible. The PEM may also have a number of risk factors inputted into it. The risk factors are a way of quantifying preferences, which are then used to calculate values for some of the optimiser settings. The optimiser settings may be non-dimensional. The optimiser values may be subjective. The PEM may utilise a Risk-Framed Control Condition Based (RFCBC). The RFCBC does not cause an otherwise feasible plan to become infeasible. The presence of the RFCBC requires the PEM scheduler to optimise the system with respect to flight/mission preferences in terms of acceptable component failure risk and weighting of performance and power consumption cost function elements. For example, such preferences may include: Electrical power consumption, system heat generation, heat signal produced, Plant life consumed, Plant performance required, acoustic signature, Emissions / Fuel consumption. The preferences may set as weights that are tuned to find the best compromise for the system. Therefore, details regarding one or more of these preferences may be inputted into the PEM with the preferences ranked in order of importance. The risks may be realised with a certain probability by being input into the system as a series of system stressors. These risk stressors may be ranked in terms of importance, the PEM is then tasked with finding an optimal solution that minimises the stressors. If the predicted risk is above a threshold, PEM may minimise states selected to minimise that risk. Alternatively, the stressors linked to risks may be input into the PEM calculations as a series of soft constraints. These soft constraints penalise the exceedance of boundaries within which the optimal solution is present. The rankings of the conditions may be changeable depending on conditions, i.e., thrust or power usage, stage of the flight (i.e., take off, cruise, or landing), electrical load on the system. The PEM system utilising the RFCBC translates the flight/mission condition optimiser preferences and are used to achieve: Failure avoidance and impact mitigation. The optimal solution may be to draw power from one generator rather than another; this may be the case if they have different power ratings. The optimal solution may be to draw power form both generators if present, or from the ESS. The skilled person will appreciate that depending upon the demand and the requirements for the system that there is a vast number of options available to the PEM to draw a solution. Thus, by utilising the risks it can act to allow for an optimised solution to be determined. The benefit of taking risk into account is that it prevents the system defaulting towards back-up (non-optimal) control laws and advising the mission planner (mission/flight system). As such, a PEM that doesn't incorporate risks will not allow for a truly optimised solution for the conditions that are required for the flight/mission. Furthermore, the ranking of risks allows the PEM system to perform calculations, with the aim of producing the most desired outcomes at the most appropriate times.

The PEM may be configured to output a solution that aims at Failure Avoidance. Acceptable risk level is used to identify where component stresses, if not addressed through demand modification, result in a functional failure probability above an acceptable level (termed mission risk appetite). There may be a risk threshold up to which point failure is an acceptable probability, beyond that action may be taken through stressor minimisation to lower the risk. Using such a solution may reduce high failure probabilities. Or by setting soft boundary constraints that reduce the likelihood of component failure. Figure 3 presents an example flow chart of the operation of the PEM. The probability of functional failure is calculated based on an aggregation of expected future flights or mission(s) usage (i.e. relative mission stresses) combined with possible future failure causes. Standard reliability techniques may be used to estimate the probability of functional failure distributions under different incipient failure cause levels / severities. In Step 301 a baseline plan is produced for the flight/mission based on future demands specified by flight/mission plan. The baseline plan may include one or more factors such as range, remaining power in ESS if present, weather conditions, mission nature, cargo, forecast mission load profiles and weight of aircraft. In Step 302 the relative mission stresses are calculated using stress and/or strain lifing models, or other deterioration mechanisms such as oxidation or thermal cracking.. In Step 303 Integrate over failure cause level probability and reliability distributions to obtain probability of functional failure. The performance of the calculations may be enhanced by assessing the probability of functional failure. In this case, Step 304 is used to determine if the functional failure probability exceeds risk appetite by one or more of the following:

    a. Rank functional failures

    b. Differentiate lifing models to obtain failure probability (stress) sensitivity to plant state (may be performed a priori during design)

c. Select most significant 'stressor state' set (size of set is design parameter >=1)

d. Modify objective function of PEM to maximally minimise state(s) (rather than as hard constraint)

Step 304 may then be followed by Step 305, wherein the optimiser calculations are executed to create a new plan and check its feasibility. The step allows for the schedular to perform a calculation and to see if it sits within the predefined boundaries set by physical limitations, and any further boundaries that represent undesired risks. As discussed above the risk limits may be set around one or more considerations of fuel use, likelihood of component failure, drawing of electrical power requirements and other such considerations. By defining a series of risk boundaries within the physical constraint boundaries can lead to a narrow or a wide range of options, which depend on the appetite for risk in the situation. Alternatively, to using the risks as soft boundaries to define an acceptable range of solutions, the risks can be minimised to reduce the stressor state for the particular risk. As such, the program works on a solution that sits within the physical boundaries with the minimum values for all of the inputted stressors. This may be iterative process. It may also be that the minimising of certain stressors is deemed more important, so the solution in which these are lower are more desirable than others. Optionally the PEM optimiser may repeat the steps from Step 302 to Step 305 until risk mitigated or computational resources are exhausted. If resources are exhausted, then no solution can be determined. In other cases the system repeats until an optimised plan that accounts for all risks and physical boundaries is produced. Once the solution is produced this can then be executed by the flight system. The PEM system may arrive at a solution in which it Identifies constraints that allow limited use of the system / subsystems with confirmed component failures. Such a non-optimal solution may be produced as the desirable outcome.

The PEM system may be used to output time-varying reference demands for factors affecting the flight/mission. For example, these reference demands may be one or more of battery state-of-charge, generator power split, and thrust demands for the engine. If two or more engines are present then the system will produce it for these as well as the battery state-of-charge, generator power, and thrust demands associated with the second or further engines. Similarly, if more than one generator is used on the or both engines then the system will output time-varying references for the generators and the split; this also applies if more than one engine is present with two or more generators. These reference demands will be generated while minimising one or more desired objectives. The desired objectives may be energy consumption, component life, fuel usage, maximising range. For example, total propulsive thrust and electrical power demands are assumed to have some (at least transient) tolerance for meeting the demanded value, which may be expressed as upper and lower bound inequality constraints, this is shown in Figure 4. Within these demand constraints, multiple power schedule solutions may exist. Each of the power schedule solutions exhibit trade-offs between (e.g.) energy efficiency, life preservation and performance. The trade-offs can be weighed to select the appropriate level of risk that the task should perform. For example, the trade-off may allow, for example, the asset to be operated under a low risk profile and energy profile for training, but in a higher performance mode in operational theatre. Alternatively, it may be higher risk profile in the case of adverse weather conditions, in which greater power may be required at the risk of higher fuel consumption. It may be that a selection of a schedule using low energy mode may be optimised to extend, or not adversely reduce, component life. In certain cases, it may be that the selection of a schedule prioritises against the risk of damage or failure of high-risk components, in which case they will be protected in either a high or low energy mode. Figure 4 presents a thrust demand trajectory for mission acceleration manoeuvre produced under different objective weightings, bounded by mission limits on thrust demand. The upper bound 401 represents the higher energy limit that the system can produce and is limited by the physical factors of the engine(s), ESS, generator(s) and the thermal management system. The lower bound 402 represents the lowest energy solution that can be supplied by the engine(s), ESS, generator(s) and the thermal management system to complete the desired task. In between the physical bounds are presented two possible solutions to the demand as output by the PEM schedular. The performance solution 403 represents a high energy solution utilising close to maximum thrust or power, but not being at the limits of performance. The energy weighted solution 404 output by the PEM schedular is determining is calculated by increasing the weighting on the requirements to minimise the thrust usage and consequently follows the lower bound more closely. In between these two schedules will sit a range of further options and the ultimate selection of which one will be the highest ranking one from all of the input variables.

The PEM system may look for impact mitigation solution. This may be in addition to or separate from the assessment of a solution relating to failure avoidance. One of the reasons that an impact mitigation is beneficial is that minimising the stressor states addresses reduction in probability of failure but does not mitigate the impact of failure. To overcome this limitation margins are introduced which help the impact of the change in flight or mission plan be absorbed until a new plan is formulated. In this case a margin may be defined as the distance between the peak demands of the system and its capability under a given boundary condition. The functional health of a system reflects a performance efficiency and results in a functional capability. Functional health may be estimated as a point or distribution. A prediction of the functional health over a flight / mission can be made based on how this is expected to trend and considering the likelihood of fault arisings. In the case of faults being present, the faults will result in some action being taken to isolate/restrict a component. By calculation over all in-flight / in-mission fault level probabilities (up to a particular failure depth (number of simultaneous failures)) a distribution of functional health can be made. This calculation may be limited to a particular failure depth i.e., a number of simultaneous failures of components within the power systems or airframe. By addressing impact mitigation the calculations determine a reserve capability (e.g. energy storage) required to mitigate a fault for a given period of time. The mitigation delay time may be chosen to allow for a replanning and execution of a new optimiser generated plan under the new failure conditions and only needs to ensure uninterrupted running until this point.

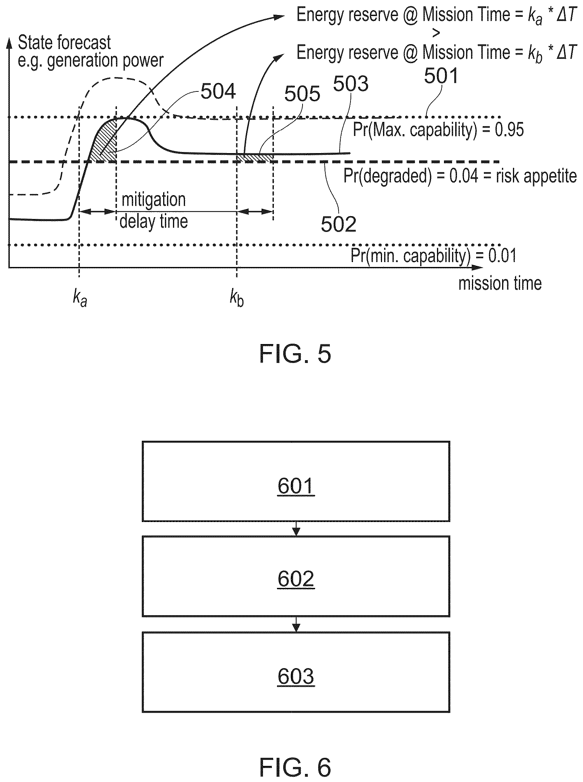

Figure 5 presents an example of a calculation of energy reserve preferences based on acceptable probability of failure risk. In the example, two discrete levels of functional health are used to calculate most likely capability 501 and degraded capability 502 (at risk-apetite level). The energy reserve is preferences is performed by calculating a flight or mission plan based on most likely functional health and capability and estimating required max capability shown as the blue line. Comparing the required capability 503 to the degraded capability 501 and 502. The hashed areas under curve 503 represent the energy reserve at $k_a = k_a \times \Delta t$ 504 and the energy reserve at kb $k_b = k_b \times \Delta t$ 505. Setting this energy reserve as a varying constraint in the optimiser and repeating from for all steps in mission or flight plan. Further calculations may be used to optimise this. For example, at each optimisation step (k) the amount of energy reserves needed are calculated to mitigate a decrease in capability to the degraded level for a mitigation delay time duration. A different reserve is calculated for each k. Note that at step $k_a$, a higher energy reserve is needed to allow a possible energy generation failure to be absorbed (by energy storage reserves), than at a point of lower power demands step $k_b$. Setting these reserves appropriately provides maximum flexibility to the optimiser to meet other energy or performance objectives.

The PEM may utilise a computer implemented method, wherein the method is instructed to run at least step 0 of the following algorithm:

Step 0. Baseline for given mission demands.

$$J^0 = J_e * w_e + J_p * w_p \text{ ; s.t. } G_{cap} \text{ \& } G_{dem}.$$

Additionally a computer implemented method may be used to also determine at least one of the following: the high priority risk failure avoidance calculation using Step 1, Impact Mitigation Step 2, or long-term health balancing - step 3

Step 1: High priority risk failure avoidance

$$J^1 = J_e * w_e + J_p * w_p + \lambda^1 * P_l \text{ ; s.t. } G_{cap} \text{ \& } G_{dem}.$$

Step 2: Impact mitigation
[convert to minimised life state (set I) values to constraints]

$$J^2 = J_e * w_e + J_p * w_p + \lambda^2 * P_m \text{ ; s.t. } G_{cap} \text{ \& } G_{dem} \text{ \& } G_{life}$$

Step 3: Long-term health balancing
[convert to minimised state (set m) values to constraints]

$$J^3 = J_e * w_e + J_p * w_p + \lambda^3 * P_d \text{; s.t. } G_{cap} \text{ \& } G_{dem} \text{ \& } G_{life} \text{ \& } G_{margin}$$

Where:

$J_e$ is an energy cost function, $J_p$ is a performance cost,

$P_l$ are a lifing penalties, $P_m$ are a set of margin penalties, $P_d$ are a set of demand penalties,

$w_e/w_p$ is the relative preference of energy vs performance, and $\lambda \gg (w_e + w_p)$ is a weighting on penalty term.

$C_{cap}$ are a set of capability constraints; $G_{dem}$ are mission demands; $G_{life}$, and $G_{margin}$ are the margin constraints.

The computer running the computer implemented method may also receive signals from sensors within the electrical equipment indicating values, such as percentage use of ESS, power generation from the generators, thrust from the engine, if more than one generator is present the split between the generators. The computer may also receive information on the flight/mission plan. An operator may directly or remotely be able to interact with the computer and adjust rankings of desired parameters.

Figure 6 presents a flow chart of a method of determining the optimum solution for at least one of the power, thermal management system of at least one more electric gas turbine engine. The method comprising step 601 receiving an input demand into a power event manager. The PEM receiving input signals from the electrical system, the gas turbine engine and the cooling system, and an input of the mission plan. In step 602 the PEM inputs a series of constraints relating to physical performance availability of the components and defines a series of boundary conditions. In step 603 the PEM schedular utilises an optimiser function to obtain control reference trajectories which minimise an objective cost function of modelled states, whilst being subject to constraints (equality or inequality) containing state limits and performance demands. at least one risk factor is input into the PEM. Further steps may include the inputting of risk factors into the PEM at step 602. The PEM uses these risk factors to narrow down to the optimal solution for the power requirement that is being asked. The use of risk factors will not cause an otherwise feasible plan to become infeasible. The presence of the inputted risks requires the PEM schedular to optimise the system with respect to flight/mission preferences in terms of acceptable component failure risk and weighting of performance and power consumption cost function elements. For example, such preferences may include: Electrical power consumption, system heat generation, heat signal produced. Details regarding one or more of these preferences may be inputted into the PEM with the preferences ranked in order of importance. The risks may be added to the system as a series of stressors. These risk stressors may be ranked in terms of importance, the PEM is then tasked with finding an optimal solution that minimises the stressors. Alternatively, the risks may be input into the PEM calculations as a series of soft constraints. These soft constraints act as boundaries within which the optimal solution is present. The rankings that of the conditions may be changeable depending on conditions, i.e., thrust or power usage, stage of the flight (i.e., take off, cruise, or landing), electrical load on the system. The PEM system utilising the risks to translates the flight/mission condition optimiser preferences and may be used in step 603 to output a result which is optimised for at least one of: Failure avoidance, or impact mitigation.

Various examples have been described, each of which feature various combinations of features. It will be appreciated by those skilled in the art that, except where clearly mutually exclusive, any of the features may be employed separately or in combination with any other features and the disclosure extends to and includes all combinations and sub-combinations of one or more features described herein.

It will also be appreciated that whilst the disclosure has been described with reference to aircraft and aircraft propulsion systems, the electric machine drive techniques described herein could be used for many other applications. These include, but are not limited to, automotive, marine and land-based applications.

**Claims**

1.  A power event manager controller for a gas turbine engine power system,
    the gas turbine engine power system comprising at least one gas turbine engine, a thermal management system and at least one of a generator, an energy storage system, the power event manager controller receiving an input power demand, and receiving input relating to the mission plan, and inputs from each of the systems within the gas turbine engine power system, based upon the inputs from the power demand and the mission plan the power event controller defines a series of constraints, and wherein the power event manager controller utilises an optimiser function to obtain control reference trajectories which minimise an objective cost function of modelled states, whilst being subject to the series of constraints, and wherein risk factors are input into the power event manager, the risk factors further acting as an expression of operator preferences the optimiser in determining an optimal solution to the input demand, and wherein the risk factors may include at least one of the following: Acceptable level of probability of performance critical component failure and/or a particular level of degraded performance.

2.  The power event manager controller according to claim 1, wherein the risk factors are realised by being inputted into the power event manager as a series of system stressors , and the optimiser is configured to find a solution which minimises the stressors.

3.  The power event manager controller according to claim 2, wherein the risk factors resulting in key stressors are inputted into the power event manager controller as soft constraints, wherein the soft constraints penalise the exceedance of boundaries within which the optimal solution is present, and the optimiser is configured to find a solution which fits within the maximum number of constraints.

4.  The power event manager according to any preceding claim, wherein the power event manager controller is configured through the risk factors to have a preference to a solution that is for failure avoidance of components within the gas turbine engine power system.

5.  The power event manager according to claim 4, wherein the power event manager controller is configured to determine a probability of functional failure by following the following steps:

> a. Produce a baseline plan for the mission based on future demands specified by mission plan,
> b. Calculate the relative mission stress using lifing models,
> c. Integrate over failure cause level probability and reliability distributions to obtain probability of functional failure.

6. The power event manager controller according to claim 5, wherein the power event manager controller assess if the determined risk exceeds a determined risk threshold, if it does the power event manager controller performs the following steps:

> i. Rank functional failures,
> ii. Differentiate lifing models to obtain failure probability (stress) sensitivity to plant state (may be performed a priori during design),
> iii. Select most significant 'stressor state' set (size of set is design parameter >=1),
> iv. Modify objective function of PEM to maximally minimise state(s) (rather than as hard constraint),
> v. Execute optimiser to create a new plan and check its feasibility.

7. The power event manager controller according to claim 6, wherein if the risk is determined to exceed a threshold the optimiser reperforms steps b - c. and i-v until the risks are mitigated or the computational resources are exhausted.

8. The power event manager controller according to any preceding claim, wherein the optimiser of the power event manager controller is configured to determine a solution that optimise for impact mitigation.

9. The power event manager controller according to claim 8, wherein the power event manager controller determines at least one value indicative of the reserve capability of the gas turbine engine power system.

10. The power event manager controller according to claim 9, wherein the power event manager controller is configured to recalculate a mission plan based on most likely functional health and capability, estimate a required maximum capability and compare the required capability to a degraded capability which is determined by constraints within the system.

11. The power event manager controller according to claim 10, wherein the power event manager controller is configured to at each optimisation step calculate the amount of energy reserves needed to mitigate a decrease in capability to the degraded level for a mitigation delay time duration and sets this energy reserve as a varying constraint in the optimiser, repeats compare required capability to the degraded capability.

12. A method of scheduling the power of a gas turbine power system comprising at least one gas turbine engine, a thermal management system and at least one of a generator or energy storage system, the method comprising:

> receiving an input from an operator relating to a change of demand,
> receiving an input related to the mission plan,
> receiving inputs from each of the systems within the gas turbine engine power system,
> defining a series of constraints based upon the inputs from the power demand and the mission plan to the power event controller,
> using a power event manager of the gas turbine power system, the power event manager having an optimiser function, and using this optimiser function to obtain control reference trajectories which minimise an objective cost function of modelled states, whilst being subject to the series of constraints wherein the method further comprises inputting risk factors into the power event manager, the risk factors further acting as an expression of operator preferences on the optimiser in determining an optimal solution to the input demand, and wherein the risk factors may include at least one of the following: Acceptable level of probability of performance critical component failure and/or a particular level of degraded performance.

13. The method according to claim 12, wherein the risk factors are inputted into the power event manager controller as stressors, and the optimiser is configured to find a solution which minimises the stressors.

14. The method according to claim 12, wherein the risk factors resulting in key stressors are inputted into the power event manager controller as soft constraints, wherein the soft constraints penalise the exceedance of boundaries within which the optimal solution is present, and the optimiser is configured to find a solution which fits within the maximum number of constraints.

**15.** The method according to any one of claims 12 to 14, wherein the power event manager optimiser function is configured through the risk factors to have a preference to a solution that is for failure avoidance of components within the gas turbine engine power system.

FIG. 1

FIG. 2

FIG. 3

FIG. 4

Energy reserve @ Mission Time = $k_a$ * $\Delta T$

\>

Energy reserve @ Mission Time = $k_b$ * $\Delta T$

501

State forecast
e.g. generation power

504

505   503

Pr(Max. capability) = 0.95

mitigation
delay time

Pr(degraded) = 0.04 = risk appetite

502

Pr(min. capability) = 0.01

mission time

$k_a$

$k_b$

FIG. 5

601

602

603

FIG. 6

Europäisches
Patentamt
European
Patent Office
Office européen
des brevets

# EUROPEAN SEARCH REPORT

**Application Number**

EP 25 21 6543

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/042103 A1 (ARMSTRONG MICHAEL [US] ET AL) 12 February 2015 (2015-02-12) | 1-4,8-14 | INV. F02C9/00 |
| A | * paragraph [0007] - paragraph [0009] * <br> * paragraph [0022] - paragraph [0048] * <br> * paragraph [0053] * <br> * abstract; figures * | 5,15 | |
| A | US 2015/185111 A1 (ARMSTRONG MICHAEL J [US] ET AL) 2 July 2015 (2015-07-02) <br> * paragraph [0003] - paragraph [0004] * <br> * paragraph [0018] - paragraph [0022] * <br> * paragraph [0026] - paragraph [0033] * <br> * abstract; figures * | 1-15 | |
| A | US 2004/123600 A1 (BRUNELL BRENT JEROME [US] ET AL) 1 July 2004 (2004-07-01) <br> * paragraph [0028] - paragraph [0033] * <br> * paragraph [0043] - paragraph [0047] * <br> * abstract; figures * | 1-15 | |

**TECHNICAL FIELDS SEARCHED (IPC)**

F02C

The present search report has been drawn up for all claims

| Place of search | Date of completion of the search | Examiner |
|---|---|---|
| The Hague | 8 April 2026 | O'Shea, Gearóid |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.............................................................................................
& : member of the same patent family, corresponding document

EPO FORM 1503 03.82 (P04C01)

**EP 4 752 352 A1**

## ANNEX TO THE EUROPEAN SEARCH REPORT
## ON EUROPEAN PATENT APPLICATION NO.

EP 25 21 6543

08-04-2026

| Patent document cited in search report | | | Publication date | Patent family member(s) | | Publication date |
|---|---|---|---|---|---|---|
| US 2015042103 | A1 | | 12-02-2015 | CA | 2897041 A1 | 18-09-2014 |
| | | | | EP | 2971699 A1 | 20-01-2016 |
| | | | | US | 2014271117 A1 | 18-09-2014 |
| | | | | US | 2015042103 A1 | 12-02-2015 |
| | | | | US | 2019222153 A1 | 18-07-2019 |
| | | | | WO | 2014143187 A1 | 18-09-2014 |
| US 2015185111 | A1 | | 02-07-2015 | EP | 2889711 A2 | 01-07-2015 |
| | | | | US | 2015185111 A1 | 02-07-2015 |
| US 2004123600 | A1 | | 01-07-2004 | CA | 2439462 A1 | 13-05-2004 |
| | | | | EP | 1420153 A2 | 19-05-2004 |
| | | | | JP | 4540955 B2 | 08-09-2010 |
| | | | | JP | 2004162698 A | 10-06-2004 |
| | | | | US | 2004123600 A1 | 01-07-2004 |